# EUROPÄISCHE PATENTSCHRIFT

(11) **EP 2 756 945 B1**
(45) Veröffentlichungstag und Bekanntmachung des Hinweises auf die Patenterteilung: **21.09.2016**
(21) Anmeldenummer: 13196775.4
(22) Anmeldetag: 12.12.2013
(51) Int. Cl.: B29D 30/44, B29D 30/60, B29D 30/58, B29D 30/30

(54) **Verfahren zur Herstellung von Fahrzeugreifen mit einer Reifenaufbautrommel**
Method for the manufacture of vehicle tyres with a tyre construction drum
Procédé de fabrication de pneus de véhicule à l'aide d'un tambour de montage de pneus

(30) Priorität: 21.01.2013 DE 102013100562
(43) Veröffentlichungstag der Anmeldung: 23.07.2014
(73) Patentinhaber: Continental Reifen Deutschland GmbH, 30165 Hannover (DE)
(72) Erfinder: Junkes, Gernot, 30655 Hannover (DE); Mehlan, Volker, 37603 Holzminden (DE)
(74) Vertreter: Widjaja, Wira

(56) Entgegenhaltungen:
- EP-A1- 0 576 923
- EP-A1- 0 685 322
- EP-A2- 1 769 905
- WO-A1-98/18613
- GB-A- 2 208 159
- JP-A- H03 190 726
- KR-A- 20110 072 177
- US-A- 4 052 246
- US-A1- 2007 289 694
- US-A1- 2009 178 757

## Beschreibung

Die Erfindung betrifft ein Verfahren zur Herstellung von Fahrzeugreifen mit einer Reifenaufbautrommel.

Es ist bekannt, Reifenrohlinge mit Reifenaufbautrommeln herzustellen, wobei einzelne Reifenbauteile nacheinander auf der Trommel aufgewickelt werden.

So befasst sich beispielsweise die JP H03 190726 A mit dem Auflegen einer Gürtellage auf eine Reifenaufbautrommel, wobei die Gürtellage gedehnt wird, um ihre Enden stumpf spleißen zu können. Dabei wird beim Auflegen der Gürtellage auf die Reifenaufbautrommel die Oberseite der Gürtellage durch eine drehbare Rolle belastet, um an dieser Seite der Gürtellage ein höheres Ausmaß an Dehnung zu erzielen als an der mit der Reifenaufbautrommel in Kontakt kommenden Unterseite der Gürtellage. Auf diese Weise soll eine etwaig erforderliche Dehnung der gesamten Gürtellage auf gleichmäßige Weise erfolgen. Die GB 2 208 159 A betrifft eine Vorrichtung zur Runderneuerung von Reifen. Der neue Laufstreifen weist eine Länge auf, die etwa um 5 % den Reifenumfang übersteigt. Um ein optimales Auflegen des Laufstreifens am zu runderneuernden Reifen sicherzustellen, wird der Laufstreifen durch ein System von Rollen während des Auflegens angedrückt und unter Spannung gehalten. Aus der EP 0 685 322 A1 ist ein Verfahren zum Erfassen der an einer Gürtelaufbautrommel benötigten Länge des zu verarbeitenden Laufstreifens bekannt, wobei mittels einer Messeinrichtung der aktuelle Durchmesser der Gürtelaufbautrommel gemessen wird und der Messwert als aktuelle benötigte Laufstreifenlänge auf eine einem Förderband zugeordnete weitere Messeinrichtung übertragen und derart ein Ablängmesser von den Messeinrichtungen gesteuert wird. Die KR 20110072177 A betrifft eine Vorrichtung, mittels welcher eine Gürtellage unter Spannung auf eine Gürtelaufbautrommel aufgebracht werden kann. Die Vorrichtung weist eine Vielzahl von Rollen auf, über welche das Gürtellagenmaterial schleifenförmig und unter Spannung zur Aufbautrommel transportiert wird.

Ein Problem beim Aufwickeln von Materialstreifen auf die Reifenaufbautrommel besteht darin, dass die Materialstreifen im Allgemeinen eine Längenabweichung von einer Solllänge aufweisen. Dadurch ist ein vollautomatisiertes Aufwickeln der Materialstreifen auf die Trommel nicht möglich. Bei einer Längenabweichung muss der Bediener das hintere Ende des Materialstreifens noch einmal ablösen und anschließend so mit dem vorderen Ende des Materialstreifens verbinden, dass eine Längenänderung entsprechend ausgeglichen wird. Auf diese Weise kann es zu Fertigungsungenauigkeiten kommen, die die Fertigungsqualität der Fahrzeugreifen beeinträchtigen kann.

Der Erfindung lag die Aufgabe zugrunde, ein Verfahren bereitzustellen, mit dem Fahrzeugreifen mit einer hohen Fertigungsqualität hergestellt werden können. Eine weitere Aufgabe besteht darin, das Aufwickeln der Reifenbauteile auf die Reifenbautrommel zu automatisieren.

Gelöst wird die Aufgabe durch ein Verfahren mit folgenden Schritten:
a) Bereitstellen eines ersten Reifenbauteiles (2) mit einem Servicer für die Reifenaufbautrommel (4),
   wobei vorab über eine Längenmessung die tatsächliche Ist-Länge des ersten Reifenbauteiles bestimmt wird,
c) Aufwickeln des ersten Reifenbauteiles auf der Reifenaufbautrommel,
   wobei der Servicer das erste Reifenbauteil auf der Unterseite der Reifenaufbautrommel anlegt, übergibt und aufwickelt,
   *wobei das erste Reifenbauteil vor dem Aufwickeln auf der Reifenaufbautrommel durch ein regelbares Andrücksystem hindurchgeführt wird,*
   wobei bei einer Abweichung der Ist-Länge von der Soll-Länge des ersten Reifenbauteiles über eine Regel-Algorithmus unterschiedliche
   Transportgeschwindigkeiten an der Reifenaufbautrommel und an dem Servicer eingestellt werden, wodurch eine Längenanpassung des ersten Reifenbauteiles auf der Reifenaufbautrommel erzielt wird,
   wobei mit einem regelbaren Andrücksystem des Servicers eine auf das erste Reifenbauteil wirkende Friktion erzeugt wird, wodurch das erste Reifenbauteil aufgrund unterschiedlicher Transportgeschwindigkeiten in seiner Länge gedehnt oder gestaucht werden kann,
d) komplettes Aufwickeln des ersten Reifenbauteiles auf der Reifenaufbautrommel, wobei das vordere Ende und das hintere Ende des aufgewickelten ersten Reifenbauteiles stumpf zusammen gespleisst werden,
e) Fertigstellen des Fahrzeugreifens mit weiteren Schritten.

Ein Vorteil der Erfindung ist insbesondere darin zu sehen, dass durch das erfindungsgemäße Verfahren das Aufwickeln der Reifenaufbauteile in Form von Materialstreifen vollkommen automatisiert erfolgen kann. Durch das Verfahren wird eine Längenabweichung des Materialstreifens von einer Solllänge automatisch ausgeglichen. Wenn beispielsweise die Materiallänge des aufzuwickelnden Reifenbauteiles zu kurz ist um einen stumpfen Spleiß zwischen vorderem und hinteren Materialstreifenende zu erzeugen, erfolgt eine automatisierte Dehnung des Materialstreifens mit dem Andrücksystem und den unterschiedlichen Transportgeschwindigkeiten. Auf diese Weise wird gewährleistet, dass der vordere Materialstreifenanfang und das hintere Materialstreifenende immer stumpf zusammengespleißt werden können. Außerdem wird durch dieses automatisierte Verfahren die Fertigungsqualität der herzustellenden Fahrzeugreifen wesentlich verbessert.

In einer vorteilhaften Weiterbildung der Erfindung ist vorgesehen, dass das Andrücksystem eine Vielzahl von segmentierten Scheiben umfasst, wobei sich die segmentierten Scheiben bei Schritt c) der Oberflächenkontur des ersten Reifenbauteiles anpassen und dadurch eine optimale Friktion auf das erste Reifenbauteil aufbringen können.
Dadurch wird ein gleichmäßiger Anpressdruck von unten auf das Reifenbauteil erreicht. Insbesondere bei Laufstreifen weist die Oberseite des Laufstreifens eine vorprofilierte Oberflächenkontur auf.

In einer weiteren vorteilhaften Weiterbildung der Erfindung ist vorgesehen, dass bei Schritt c) die segmentierten Scheiben über eine Kugellagerung rotieren können.
Auf diese Weise wird eine optimale Lagerung der segmentierten Scheiben erreicht.

In einer weiteren vorteilhaften Weiterbildung der Erfindung ist vorgesehen, dass die segmentierten Scheiben auf einem Stützelement angeordnet sind, wobei die segmentierten Scheiben rechteckförmige Ausschnitte aufweisen durch die eine Führung an dem Stützelement erfolgt.
Durch die einzelnen rechteckförmigen Ausschnitte wird eine einfache und sichere Führung der segmentierten Scheiben in horizontaler Richtung erreicht.

In einer weiteren vorteilhaften Weiterbildung der Erfindung ist vorgesehen, dass auf der Unterseite des Stützelementes ein pneumatisch betriebener Balg angeordnet ist,
wobei bei Schritt c) mit dem Balg eine homogene und definierte Druckkraft auf die einzelnen segmentierten Scheiben aufgegeben werden kann, wodurch die segmentierten Scheiben eine lineare Hubbewegung ausführen und das erste Reifenbauteil gegen ein gegenüberliegendes Gegendrucksystem drücken.
Mit dem pneumatischen Balg kann auf einfache Weise ein gleichmäßiger Anpressdruck erzeugt werden, der auf die einzelnen segmentierten Scheiben übertragen wird.

In einer weiteren vorteilhaften Weiterbildung der Erfindung ist vorgesehen, dass das Gegendrucksystem ein Förderband ist.

Mit dem Förderband lässt sich auf einfache Weise die Transportgeschwindigkeit variieren.

In einer weiteren vorteilhaften Weiterbildung der Erfindung ist vorgesehen, dass das Gegendrucksystem eine oder eine Vielzahl von Rollen mit einem Antrieb umfasst. Mit einzelnen Rollen als Gegendrucksystem läßt sich die Transportgeschwindigkeit des Reifenbauteiles auf einfache Weise variieren.

In einer weiteren vorteilhaften Weiterbildung der Erfindung ist vorgesehen, dass bei Schritt a) der Servicer eine Laufstreifenzubringer und das erste Reifenbauteil ein Laufstreifen ist. Laufstreifen für Fahrzeugreifen weisen eine variierende Schichtdicke im Querschnitt auf. Diese variierende Schichtdecke lässt sich mit den segmentierten Scheiben optimal ausgleichen, sodass ein optimaler Anpressdruck erzeugt wird.

In einer weiteren vorteilhaften Weiterbildung der Erfindung ist vorgesehen, dass der Laufstreifen auf der Oberseite eine Kontur aufweist, wobei bei Schritt c) sich die segmentierten Scheiben der Kontur anpassen.
Dadurch kann der Laufstreifen mit dem Andrücksystem sicher gehalten werden.

In einer weiteren vorteilhaften Weiterbildung der Erfindung ist vorgesehen, dass der Laufstreifenzubringer einen Schwenkrahmen umfasst und das Andrücksystem im Schwenkrahmen angeordnet ist, wobei der Schwenkrahmen bei Schritt c) von unten gegen die Unterseite der Reifenbautrommel geschwenkt wird.
Dadurch kann das vordere Materialende des Laufstreifens mit einer hohen Genauigkeit auf die untere Seite der Reifenaufbautrommel übertragen werden.

Anhand eines Ausführungsbeispiels soll die Erfindung näher erläutert werden. Es zeigt:
- Fig. 1:: ein Ausführungsbeispiel des erfindungsgemäßen Verfahrens
- Fig. 2:: eine Schnittansicht durch den unteren Teil des Andrücksystems
- Fig. 3:: eine Schnittansicht des unteren Teils des Andrücksystems von der Seite
- Fig. 4:: eine Seitenansicht des Servicers mit dem Andrücksystem

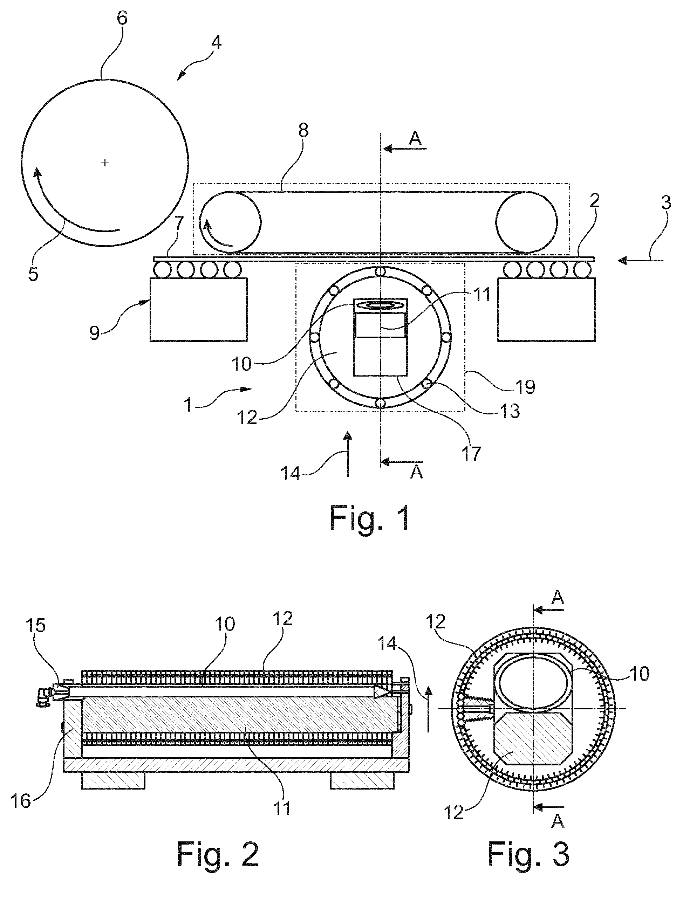

Die Figur 1 zeigt ein Ausführungsbeispiel des erfindungsgemäßen Verfahrens. Auf die Reifenaufbautrommel 4, die in einer Seitenansicht schematisch dargestellt ist, werden einzelne Reifenbauteile in Form von Materialstreifen aufgewickelt. Bei diesem Ausführungsbespiel handelt es sich bei der Reifenaufbautrommel 4 um eine Gürteltrommel, auf die bereits einzelne Gürtellagen und die Spulbandage 6 aufgespult sind. Die Gürteltrommel rotiert beim Aufwickeln in Rotationsrichtung 5 mit einer vorgegebenen Transportgeschwindigkeit. Das Andrücksystem 1 des Servicers umfasst mehrere Baugruppen. Das erste Reifenbauteil 2, beispielsweise in Form eines Laufstreifens, wird mit einer Transportgeschwindigkeit 3 durch das dargestellte Andrücksystem 1 hindurchgefördert. Mit dem Andrücksystem 1 wird eine vorgegebene Transportgeschwindigkeit des ersten Reifenaufbauteiles 2 erreicht. Zunächst wird die Länge des Laufstreifens 2 mit einem Längenmesssystem ermittelt. Bei einer Abweichung der Länge von einer Solllänge des Laufstreifens werden unterschiedlichen Transportgeschwindigkeiten an der Reifenaufbautrommel und an dem Andrücksystem 1 eingestellt. Durch die unterschiedlichen Transportgeschwindigkeiten wird der Laufstreifen 2 in seiner Länge entweder gedehnt oder gestaucht, um dadurch einen stumpfen Spleiß zwischen dem vorderen und hinteren Ende des Laufstreifens 2 zu erreichen. Das vordere Ende 7 des ersten Reifenaufbauteiles 2 wird von unten gegen die untere Seite der Reifenaufbautrommel 4 angelegt. Das vordere Ende 7 wird beispielsweise durch Fördemollen 9 gehalten. Das Andrücksystem 1 umfasst auf der Oberseite ein Gegendrücksystem 8 in Form eines Förderbandes, welches eine vorgegebene Transportgeschwindigkeit erzeugt. Auf der Unterseite befindet sich der untere Teil 19 des Andrücksystems 1. Dieser untere Teil umfasst segmentierte, kugelgelagerte12, einen pneumatischen Balg 10 und ein Stützelement 11, welches in einem rechteckförmigen Ausschnitt 17 der Scheiben 12 gelagert ist. Der Laufstreifen 2 wird in Transportrichtung 3 durch das Andrücksystem hindurch gefördert, wobei der untere Teil 19 des Andrücksystems einen entsprechenden Anpressdruck erzeugt. Mit dem pneumatischen Balg 10 wird bei einer Druckzufuhr der Balg expandiert, der die einzelnen kugelgelagerten segmentierten Scheiben in Druckrichtung 14 gegen den Laufstreifen 2 drückt.

Die Figur 2 zeigt eine Schnittansicht durch den unteren Teil des Andrücksystems 1, wobei mit der Schnittansicht eine Ansicht in Transportrichtung 3 dargestellt ist. In dieser Ansicht sind die einzelnen nebeneinanderliegenden segmentierten kugelgelagerten Scheiben 12 dargestellt, die sich unabhängig voneinander in Druckrichtung 14 bewegen können. Dadurch können sich die segmentierten Scheiben der Außenkontur des Laufstreifens 2 anpassen. Der pneumatische Balg 10 ist zwischen den einzelnen segmentierten Scheiben 12 und dem unteren Stützelement 11 angeordnet. Alle Bauteile sind in einer Rahmenhalterung 16 integriert. Die Druckluft wird über das Ventil 15 dem pneumatischen Balg 10 zugeführt.

Die Figur 3 zeigt den unteren Teil des Andrücksystems in einer ähnlichen Schnittansicht wie in der Figur 1. Der pneumatische Balg 10 ist in einem expandierten Zustand dargestellt.

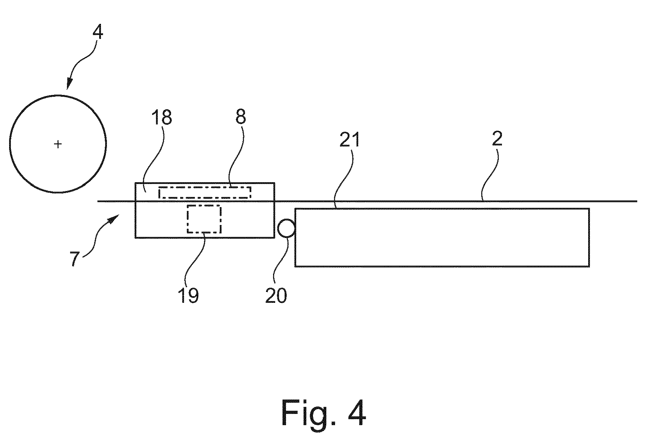

Die Figur 4 zeigt den hinteren Teil 21 des Servicers, der über einen Schwenkpunkt 20 mit dem Schwenkrahmen 18 verbunden ist. In dem Schwenkrahmen 18 ist der untere Teil 19 und der obere Teil 8 des Andrücksystems integriert. Der Laufstreifen 2 wird durch das Andrücksystem 2 hindurchgeführt und von unten an die Reifenaufbautrommel 4 angelegt. Der Schwenkrahmen 18 dient dazu, vor dem Anlegen des vorderen Teiles 7 des Laufstreifens 2 den Schwenkrahmen 18 nach oben zu schwenken. Anschließend wird das vordere Ende 7 des Laufstreifens von unten an die Reifenaufbautrommel 4 übergeben. Es ist ebenfalls denkbar statt einem Andrücksystem mehrere nacheinander angeordnete Andrücksysteme einsetzen, die die Transportgeschwindigkeit des Laufstreifens 2 erhöhen oder verringern. Es ist ebenfalls möglich, statt segmentierten kugelgelagerten Scheiben eine Schaumstoffrolle einzusetzen, die sich der profilierten Laufstreifenkontur anpassen kann.

### Bezugszeichenliste

### (ist Teil der Beschreibung)

- 1: Andrücksystem des Servicers
- 2: erstes Reifenbauteil, z.B. in Form eines Laufstreifens
- 3: Transportgeschwindigkeit des Reifenbauteiles auf dem Servicer
- 4: Reifenaufbautrommel, z.B. in Form einer Gürteltrommel
- 5: Rotationsrichtung der Reifenaufbautrommel bzw. Transportgeschwindigkeit des Reifenbauteiles auf dem Servicer
- 6: Reifenbauteil, z.B. in Form einer Spulbandage
- 7: Vorderes Ende des ersten Reifenbauteiles
- 8: Gegendrucksystem in Form eines Förderbandes
- 9: Förderrollen für vorderes Ende des ersten Reifenbauteiles
- 10: Pneumatischer Balg
- 11: Stützelement
- 12: Segmentierte, kugelgelagerte Scheiben
- 13: Kugellagerung
- 14: Druckrichtung der segmentierten Scheiben gegen das erste Reifenbauteil
- 15: Ventil
- 16: Rahmenhalterung für unteres Teil des Andrücksystems
- 17: Rechteckförmiger Ausschnitt in den Scheiben
- 18: Schwenkrahmen
- 19: unteres Teil des Andrücksystems
- 20: Schwenkpunkt
- 21: Hinterer Teil des Servicers

## Patentansprüche

1. Verfahren zur Herstellung von Fahrzeugreifen mit einer Reifenaufbautrommel (4) mit folgenden Schritten:
a) Bereitstellen eines ersten Reifenbauteiles (2) mit einem Servicer für die Reifenaufbautrommel (4),
wobei vorab über eine Längenmessung die tatsächliche Ist-Länge des ersten Reifenbauteiles (2) bestimmt wird,
c) Aufwickeln des ersten Reifenbauteiles (2) auf der Reifenaufbautrommel (4), wobei der Servicer das erste Reifenbauteil (2) auf der Unterseite der Reifenaufbautrommel (4) anlegt, übergibt und aufwickelt,
*wobei das erste Reifenbauteil (2) vor dem Aufwickeln auf der Reifenaufbautrommel (4) durch ein regelbares Andrücksystem (1) hindurchgeführt wird,*
wobei bei einer Abweichung der Ist-Länge von der Soll-Länge des ersten Reifenbauteiles (2) über eine Regel-Algorithmus unterschiedliche Transportgeschwindigkeiten (5, 3) an der Reifenaufbautrommel und an dem Servicer eingestellt werden, wodurch eine Längenanpassung des ersten Reifenbauteiles (2)auf der Reifenaufbautrommel (4) erzielt wird,
wobei mit *dem* regelbaren Andrücksystem (1) des Servicers eine auf das erste Reifenbauteil (2) wirkende Friktion erzeugt wird, wodurch das erste Reifenbauteil (2) aufgrund unterschiedlicher Transportgeschwindigkeiten (5, 3) in seiner Länge gedehnt oder gestaucht werden kann,
d) komplettes Aufwickeln des ersten Reifenbauteiles (2) auf der Reifenaufbautrommel (4), wobei das vordere Ende (7) und das hintere Ende des aufgewickelten ersten Reifenbauteiles (2) stumpf zusammen gespleisst werden,
e) Fertigstellen des Fahrzeugreifens mit weiteren Schritten.

2. Verfahren nach Anspruch 1,
**dadurch gekennzeichnet, dass**
das Andrücksystem (1) eine Vielzahl von segmentierten Scheiben (12) umfasst, wobei sich die segmentierten Scheiben (12) bei Schritt c) der Oberflächenkontur des ersten Reifenbauteiles (2) anpassen und dadurch eine optimale Friktion auf das erste Reifenbauteil (2) aufbringen können.

3. Verfahren nach Anspruch 2,
**dadurch gekennzeichnet, dass**
bei Schritt c) die segmentierten Scheiben (12) über eine Kugellagerung (13) rotieren können.

4. Verfahren nach einem der vorhergehenden Ansprüche 2-3
**dadurch gekennzeichnet, dass**
die segmentierten Scheiben (12) auf einem Stützelement (11) angeordnet sind, wobei die segmentierten Scheiben (12) rechteckförmige Ausschnitte (17) aufweisen durch die eine Führung an dem Stützelement (11) erfolgt.

5. Verfahren nach Anspruch 4,
**dadurch gekennzeichnet, dass**
auf der Unterseite des Stützelementes (11) ein pneumatisch betriebener Balg (10) angeordnet ist,
wobei bei Schritt c) mit dem Balg (10) eine homogene und definierte Druckkraft (14) auf die einzelnen segmentierten Scheiben aufgegeben werden kann,
wodurch die segmentierten Scheiben (12) eine lineare Hubbewegung auführen und das erste Reifenbauteil (2) gegen ein gegenüberliegendes Gegendrucksystem (8) drücken.

6. Verfahren nach Anspruch 5,
**dadurch gekennzeichnet, dass**
das Gegendrucksystem (8) ein Förderband ist.

7. Verfahren nach einem der vorhergehenden Ansprüche 5-6,
**dadurch gekennzeichnet, dass**
das Gegendrucksystem eine oder eine Vielzahl von Rollen mit einem Antrieb umfasst.

8. Verfahren nach einem der vorhergehenden Ansprüche,
**dadurch gekennzeichnet, dass**
bei Schritt a) der Servicer ein Laufstreifenzubringer und das erste Reifenbauteil (2) ein Laufstreifen ist.

9. Verfahren nach Anspruch 8,
**dadurch gekennzeichnet, dass**
der Laufstreifen (2) auf der Oberseite eine Kontur aufweist, wobei bei Schritt c) sich die segmentierten Scheiben (12) der Kontur anpassen.

10. Verfahren nach einem der vorhergehenden Ansprüche 8-9,
**dadurch gekennzeichnet, dass**
der Laufstreifenzubringer einen Schwenkrahmen (18) umfasst und das Andrücksystem (1) im Schwenkrahmen angeordnet ist,
wobei der Schwenkrahmen (18) bei Schritt c) von unten gegen die Unterseite der Reifenbautrommel (4) geschwenkt wird.

## Claims

1. Method for manufacturing vehicle tyres with a tyre building drum (4) comprising the following steps:
a) providing a first tyre component (2) by means of a servicer for the tyre building drum (4),
the actual length of the first tyre component (2) being determined in advance by way of a length measurement,
c) winding up the first tyre component (2) on the tyre building drum (4), the servicer placing the first tyre component (2) on the underside of the tyre building drum (4), transferring it and winding it up,
the first tyre component (2) being led through a controllable pressure-exerting system (1) before being wound up on the tyre building drum (4), different transporting rates (5, 3) being set on the tyre building drum and on the servicer by way of a control algorithm if there is a deviation of the actual length from the desired length of the first tyre component (2), whereby an adaptation of the length of the first tyre component (2) on the tyre building drum (4) is achieved,
a friction acting on the first tyre component (2) being produced by the controllable pressure-exerting system (1) of the servicer, whereby the first tyre component (2) can be stretched or compressed in its length as a result of different transporting rates (5, 3),
d) complete winding up of the first tyre component (2) on the tyre building drum (4), the front end (7) and the rear end of the wound-up first tyre component (2) being spliced together end to end,
e) completion of the vehicle tyre by further steps.

2. Method according to Claim 1,
**characterized in that**
the pressure-exerting system (1) comprises a multiplicity of segmented discs (12),
the segmented discs (12) being adapted in step c) to the surface contour of the first tyre component (2) and this allowing an optimum friction to be applied to the first tyre component (2).

3. Method according to Claim 2,
**characterized in that**
in step c) the segmented discs (12) can be rotated by way of a ball bearing (13).

4. Method according to one of the preceding Claims 2-3,
**characterized in that**
the segmented discs (12) are arranged on a supporting element (11),
the segmented discs (12) having rectangular cutouts (17), by which a guidance on the supporting element (11) takes place.

5. Method according to Claim 4,
**characterized in that**
a pneumatically operated bladder (10) is arranged on the underside of the supporting element (11), the bladder (10) allowing a homogeneous and defined compressing force (14) to be applied to the individual segmented discs in step c),
whereby the segmented discs (12) perform a linear lifting movement and press the first tyre component (2) against an opposite counter-pressing system (8).

6. Method according to Claim 5,
**characterized in that**
the counter-pressing system (8) is a conveyor belt.

7. Method according to one of the preceding Claims 5-6,
**characterized in that**
the counter-pressing system comprises one or a multiplicity of rollers with a drive.

8. Method according to one of the preceding claims,
**characterized in that**
in step a) the servicer is a tread supplier and the first tyre component (2) is a tread.

9. Method according to Claim 8,
**characterized in that**
the tread (2) has a contour on the upper side, the segmented discs (12) adapting themselves to the contour in step c).

10. Method according to one of the preceding Claims 8-9,
**characterized in that**
the tread supplier comprises a swivelling frame (18) and the pressure-exerting system (1) is arranged in the swivelling frame,
the swivelling frame (18) being swivelled from below against the underside of the tyre building drum (4) in step c).

## Revendications

1. Procédé de fabrication de pneumatiques de véhicules avec un tambour de confection de pneumatiques (4) comprenant les étapes suivantes :
a) mise à disposition d'un premier composant de pneu (2) avec un serviceur pour le tambour de confection de pneumatiques (4),
la longueur effective réelle du premier composant de pneu (2) étant déterminée au préalable par le biais d'une mesure de longueur,
c) enroulement du premier composant de pneu (2) sur le tambour de confection de pneumatiques (4), le serviceur mettant en contact, transfèrant et enroulant le premier composant de pneu (2) sur le côté inférieur du tambour de confection de pneumatiques (4),
le premier composant de pneu (2) étant conduit à travers un système d'appui réglable (1) avant l'enroulement sur le tambour de confection de pneumatiques (4),
en cas d'écart entre la longueur réelle et la longueur théorique du premier composant de pneu (2), différentes vitesses de transport (5, 3) étant réglées par un algorithme de réglage sur le tambour de confection de pneumatiques et sur le serviceur, une adaptation de la longueur du premier composant de pneu (2) au tambour de confection de pneumatiques (4) étant ainsi obtenue,
avec le système d'appui réglable (1) du serviceur, une friction agissant sur le premier composant de pneu (2) étant générée, le premier composant de pneu (2) pouvant ainsi être dilaté ou rétracté sur la base de différentes vitesses de transport (5, 3),
d) enroulement complet du premier composant de pneu (2) sur le tambour de confection de pneumatiques (4), l'extrémité avant (7) et l'extrémité arrière du premier composant de pneu (2) enroulé pouvant être épissurées ensemble bout à bout,
e) finalisation du pneumatique de véhicule par des étapes supplémentaires.

2. Procédé selon la revendication 1,
**caractérisé en ce que**
le système d'appui (1) comprend une multitude de disques segmentés (12), les disques segmentés (12) s'adaptant dans l'étape c) au contour de surface du premier composant de pneu (2) et pouvant ainsi exercer une friction optimale sur le premier composant de pneu (2).

3. Procédé selon la revendication 2,
**caractérisé en ce que**
dans l'étape c) les disques segmentés (12) peuvent tourner sur un roulement à billes (13).

4. Procédé selon l'une des revendications précédentes 2 et 3, **caractérisé en ce que**
les disques segmentés (12) sont installés sur un élément d'appui (11), les disques segmentés (12) comportant des découpes de forme rectangulaire (17) à travers lesquelles un guidage vers l'élément d'appui (11) est effectué.

5. Procédé selon la revendication 4,
**caractérisé en ce que**
sur le côté inférieur de l'élément d'appui (11) est installé un soufflet à entraînement pneumatique (10),
une force de pression homogène et définie (14) pouvant être exercée à l'étape c) par le soufflet (10) sur les différents disques segmentés,
de sorte que les disques segmentés (12) suivent un mouvement de levage linéaire et poussent le premier composant de pneu (2) contre un système de contre-pression (8) disposé en face.

6. Procédé selon la revendication 5,
**caractérisé en ce que**
le système de contre-pression (8) est une courroie transporteuse.

7. Procédé selon l'une des revendications précédentes 5 et 6, **caractérisé en ce que**
le système de contre-pression comprend un rouleau ou une multitude de rouleaux munis d'un système d'entraînement.

8. Procédé selon l'une des revendications précédentes,
**caractérisé en ce que**
dans l'étape a), le serviceur est un dispositif d'alimentation en bande de roulement et le premier composant de pneu (2) une bande de roulement.

9. Procédé selon la revendication 8,
**caractérisé en ce que**
la bande de roulement (2) présente sur son côté supérieur un contour, les disques segmentés (12) s'adaptant à ce contour dans l'étape c).

10. Procédé selon l'une des revendications précédentes 8 et 9,
**caractérisé en ce que**
le dispositif d'alimentation en bande de roulement inclut un cadre pivotant (18) et le système d'appui (1) est disposé dans ce cadre pivotant,
le cadre pivotant (18) étant pivoté par le bas contre le côté inférieur du tambour de confection de pneumatiques (4) lors de l'étape c).
